# EUROPEAN PATENT APPLICATION

(11) **EP 3 971 016 A1**
(43) Date of publication of application: **23.03.2022**
(21) Application number: 20804828.0
(22) Date of filing: 20.01.2020
(51) Int. Cl.: B60L 15/20, B60K 17/02, B60K 17/04, B60K 6/36, B60K 6/383, B60K 6/48, B60L 9/18, B60L 50/16

(54) **POWER TRANSMISSION MECHANISM**

(30) Priority: 16.05.2019 JP 2019092617
(71) Applicant: Tsubakimoto Chain Co., Osaka 530-0005 (JP)
(72) Inventor: MORIMOTO, Takayuki, Osaka-shi, Osaka 530-0005 (JP); KUNIMATSU, Kohei, Osaka-shi, Osaka 530-0005 (JP); NAKAGAWA, Eiichi, Osaka-shi, Osaka 530-0005 (JP)
(74) Representative: dompatent von Kreisler Selting Werner - Partnerschaft von Patent- und Rechtsanwälten mbB
(86) International application number: PCT/JP2020/001730
(87) International publication number: WO 2020/230368

(57) **Abstract**

Two reduction gears have at least two common rotation center axes. A first power source (121) is coupled to the high-speed side of a first reduction gear (111) on a first rotation center axis (101). A second power source (122) is coupled to the high-speed side of a second reduction gear (112) on a second rotation center axis (102). A first input/output shaft (141) is coupled to the low-speed side of the second reduction gear (112) on the first rotation center axis (101). The high-speed side of the first reduction gear (111) is coupled to the low-speed side of the second reduction gear (112) on the first rotation center axis (101) via a first clutch (131). The low-speed side of the first reduction gear (111) is coupled to the high-speed side of the second reduction gear (112) on the second rotation center axis (102) via a second clutch (132).

## Description

### [Technical Field]

The present invention relates to a power transmission system with at least two power sources including a first power source and a second power source, at least one input/output shaft including a first input/output shaft, two reduction gears including a first reduction gear and a second reduction gear, and at least two clutches including a first clutch and a second clutch.

### [Background Art]

Power transmission systems with a plurality of power sources such as an internal combustion engine and an electric motor for driving an input/output shaft or performing energy recovery or the like through a plurality of reduction gears and clutches, such as the power transmission system of hybrid automobiles, have commonly been known.

Various structures for the arrangement of the plurality of power sources, reduction gears, and clutches of the power transmission system have been proposed, from a complex design having a multi-stage planetary gear system, for example, to a simple design in which a plurality of drive sources are coupled together coaxially. Likewise, various control methods of the plurality of power sources, reduction gears, and clutches have been proposed in relation to the structures.

For example, a power transmission system for hybrid automobiles such as the one described in Patent Literature 1 is known, in which the structure and control are so simplified that control of other parts than the engine and the (electric) motor is made unnecessary.

The power transmission system described in Patent Literature 1 (see Fig. 1 of Patent Literature 1) has a differential gear unit (22) between a first motor (16) and an engine (20), with a first one-way clutch (26) disposed between this differential gear unit (22) and the engine (20), and a second one-way clutch (28) disposed inside the differential gear unit (22).

The differential gear unit (22) is made up of a first drive pinion bevel gear (32) coupled to the engine (20) via the first one-way clutch (26), a second drive pinion bevel gear (34) having one end coupled to this first drive pinion bevel gear (32) via the second one-way clutch (28) and the other end coupled to the first motor (16), first and second driven bevel gears (36, 38) that operate in engagement with these first and second drive pinion bevel gears (32, 34), and a carrier (40) joining these first and second driven bevel gears (36, 38) to transmit the power from the first and second drive pinion bevel gears (32, 34) to the driven reduction gear (24) .

The rotation of the driven reduction gear (24) is transmitted to an axle (30), and a second motor (18) is coupled to the axle (30).

The first one-way clutch (26) is configured to transmit the rotation of the engine (20) only in the direction in which the first drive pinion bevel gear (32) rotates clockwise, while the second one-way clutch (28) is configured to transmit the rotation of the second drive pinion bevel gear (34) only in the direction in which the first drive pinion bevel gear (32) rotates clockwise.

When the second drive pinion bevel gear (34) is rotated clockwise by driving the first motor (16), this power is transmitted only as far as to the first drive pinion bevel gear (32) and not to the engine (20).

The engine (20) rotates clockwise, and when it rotates faster than the first motor (16), this power is transmitted only as far as to the first drive pinion bevel gear (32) and not to the second drive pinion bevel gear (34) and the first motor (16).

Various patterns of control of drive and energy recovery are possible by controlling the first motor (16), engine (20), and second motor (18).

### [Citation List]

### [Patent Literature]

[Patent Literature 1] Japanese Patent No. 4355444

### [Summary of Invention]

### [Technical Problem]

In the power transmission system known from Patent Literature 1 described above, the differential gear unit (22) is directly rotated by the rotation of the engine and the (electric) motor, meaning that the first and second driven bevel gears (36, 38) rotatably supported on the carrier are revolved at high speed.

One problem was that the system could hardly be made smaller because of the need to secure sufficient rigidity and strength for the differential gear unit (22) to preform differential operations correctly while rotating at high speed.

Moreover, since the reduction gear consists only of the differential system, size reduction was difficult if a larger reduction ratio was to be achieved.

Another issue is that the differential gear unit (22) that rotates at high speed and can hardly be made smaller has a large rotational moment of inertia, which lowers the responsiveness to changes in rpm.

The first drive pinion bevel gear (32) and the second drive pinion bevel gear, and the first driven bevel gear (36) and the second driven bevel gear do not rotate relative to each other when driven by both of the first motor (16) and the engine (20). This led to another issue of poor durability caused by uneven wear on gear teeth surfaces because the same teeth stay continuously meshed with each other.

The present invention solves these problems, its object being to provide a simple-structured power transmission system that allows easy size reduction and offers excellent responsiveness.

### [Solution to Problem]

The present invention solves the problems described above by providing a power transmission system including: at least two power sources including a first power source and a second power source; at least one input/output shaft including a first input/output shaft; two reduction gears including a first reduction gear and a second reduction gear; and at least two clutches including a first clutch and a second clutch, the first reduction gear and the second reduction gear having at least two common rotation center axes including a first rotation center axis and a second rotation center axis, the first power source being coupled to a high-speed side of the first reduction gear on the first rotation center axis, the second power source being coupled to a high-speed side of the second reduction gear on the second rotation center axis, the first input/output shaft being coupled to a low-speed side of the second reduction gear on the first rotation center axis, the high-speed side of the first reduction gear being coupled to the low-speed side of the second reduction gear on the first rotation center axis via the first clutch, and a low-speed side of the first reduction gear being coupled to the high-speed side of the second reduction gear on the second rotation center axis via the second clutch.

### [Advantageous Effects of Invention]

In the power transmission system according to the invention set forth in claim 1, the first reduction gear and the second reduction gear have at least two common rotation center axes including a first rotation center axis and a second rotation center axis; the first power source is coupled to a high-speed side of the first reduction gear on the first rotation center axis; the second power source is coupled to a high-speed side of the second reduction gear on the second rotation center axis; the first input/output shaft is coupled to a low-speed side of the second reduction gear on the first rotation center axis; the high-speed side of the first reduction gear is coupled to the low-speed side of the second reduction gear on the first rotation center axis via the first clutch; and the low-speed side of the first reduction gear is coupled to the high-speed side of the second reduction gear on the second rotation center axis via the second clutch. The power sources, input/output shaft, and clutches are all gathered together on the two rotation center axes, and can be arranged in a compact manner, which makes size reduction easy.

Also, having two reduction gears allows a small system to achieve a large reduction ratio.

The two rotation center axes being arranged in parallel help realize simple-structured reduction gears and enable size reduction, as well as help reduce the rotational moment of inertia, which allows the system to offer excellent responsiveness.

Moreover, the reduction gears rotate constantly relative to each other so that the wear is made even and the durability is improved.

According to the configuration set forth in claim 2, at least one of the two reduction gears is configured by a sprocket and a chain. This means that the distance between the two rotation center axes can be set freely, which increases the degree of freedom in the arrangement of the power sources and input/output shaft.

According to the configuration set forth in claim 3, at least one of the at least two clutches is a one-way clutch. Clutch control from outside is therefore not necessary, and power distribution control is possible only through rotation control of the power sources.

According to the configuration set forth in claim 4, the at least two power sources include at least one electric motor. This increases the responsiveness in the drive control and enables regenerative control during braking.

According to the configuration set forth in claim 5, the at least two power sources include at least one internal combustion engine, which means the power transmission system is applicable to a hybrid automobile.

According to the configuration set forth in claim 6, a third power source is coupled to a low-speed side of the first reduction gear on the second rotation center axis via a third clutch. Three power sources can thus be used without making the power transmission system itself larger or more complex.

### [Brief Description of Drawings]

[Fig. 1] Fig. 1 is an illustrative diagram of a power transmission system 100 according to a first embodiment of the present invention.
[Fig. 2] Fig. 2 is an illustrative diagram of the operation of the power transmission system 100 according to the first embodiment of the present invention.
[Fig. 3] Fig. 3 is an illustrative diagram of a power transmission system 200 according to a second embodiment of the present invention.
[Fig. 4] Fig. 4 is an illustrative diagram of the operation of the power transmission system 200 according to the second embodiment of the present invention.
[Fig. 5] Fig. 5 is an illustrative diagram of a power transmission system 200B according to a first variation example of the second embodiment of the present invention.
[Fig. 6] Fig. 6 is an illustrative diagram of a power transmission system 200C according to a second variation example of the second embodiment of the present invention.

### [Description of Embodiments]

A power transmission system according to the present invention will be hereinafter described with reference to the drawings.

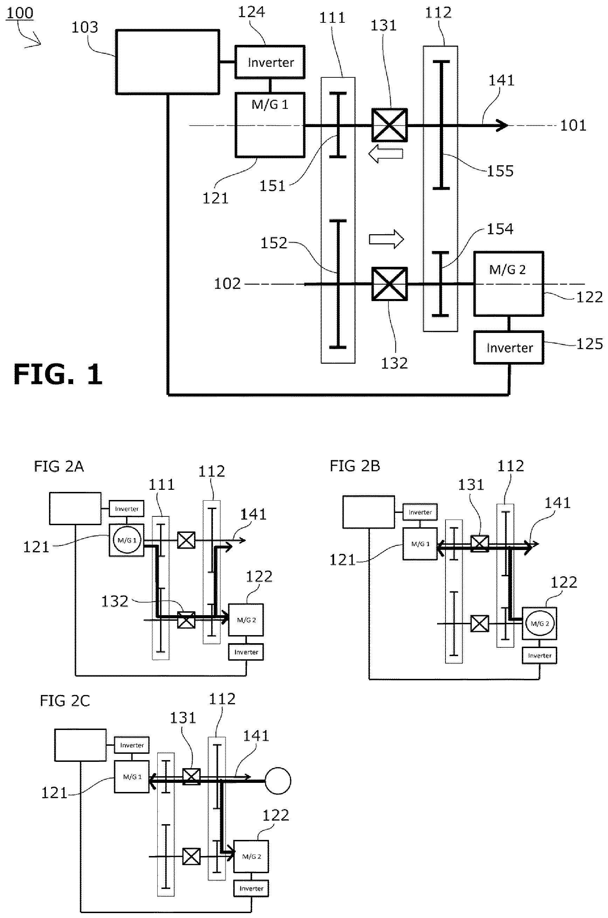

The power transmission system 100 according to the first embodiment of the present invention includes, as illustrated in Fig. 1, a first power source 121, a second power source 122, a first input/output shaft 141, a first reduction gear 111, a second reduction gear 112, a first clutch 131, and a second clutch 132.

The first reduction gear 111 and the second reduction gear 112 have two common rotation center axes, a first rotation center axis 101 and a second rotation center axis 102.

The first reduction gear 111 is configured to include a sprocket 151 on the first rotation center axis 101 on the high-speed side, a sprocket 152 on the second rotation center axis 102 on the low-speed side, and a chain passed around the sprocket 151 and the sprocket 152.

The second reduction gear 112 is configured to include a sprocket 154 on the second rotation center axis 102 on the high-speed side, a sprocket 155 on the first rotation center axis 101 on the low-speed side, and a chain passed around the sprocket 154 and the sprocket 155.

The first power source 121 is configured as an electric motor driven by an inverter circuit 124 and coupled to the high-speed side of the first reduction gear 111 on the first rotation center axis 101.

The second power source 122 is configured as an electric motor driven by an inverter circuit 125 and coupled to the high-speed side of the second reduction gear 112 on the second rotation center axis 102.

The inverter circuits 124 and 125 are controlled by a controller 103. The first input/output shaft 141 is coupled to the low-speed side of the second reduction gear 112 on the first rotation center axis 101.

The high-speed side of the first reduction gear 111 is coupled to the low-speed side of the second reduction gear 112 on the first rotation center axis 101 via the first clutch 131, and the low-speed side of the first reduction gear 111 is coupled to the high-speed side of the second reduction gear 112 on the second rotation center axis 102 via the second clutch 132.

The first clutch 131 is configured as a one-way clutch that transmits the torque only from the low-speed side of the second reduction gear 112 to the high-speed side of the first reduction gear 111.

Therefore, when the rotation speed on the high-speed side of the first reduction gear 111 is higher than that of the low-speed side of the second reduction gear 112, no torque transmission occurs.

The second clutch 132 is configured as a one-way clutch that transmits the torque only from the low-speed side of the first reduction gear 111 to the high-speed side of the second reduction gear 112.

Therefore, when the rotation speed on the high-speed side of the second reduction gear 112 is higher than that of the low-speed side of the first reduction gear 111, no torque transmission occurs.

By adopting one-way clutches that transmit torque only in one way in both forward and reverse directions (referred to as "bidirectional one-way clutch" or "two-way clutch", etc.), the same power transmission effect will be achieved in both forward and reverse directions.

The operation of the power transmission system 100 configured as described above is now explained.

When transmitting a rotation torque to the first input/output shaft 141 by driving the first power source 121, the drive power of the first power source 121 is transmitted in the order of the high-speed side of the first reduction gear 111, the low-speed side of the first reduction gear 111, the second clutch 132, the high-speed side of the second reduction gear 112, the low-speed side of the second reduction gear 112, and the first input/output shaft 141, as illustrated in Fig. 2A.

At this time, the torque is transmitted to the second power source 122, too, because the high-speed side of the second reduction gear 112 and the second power source 122 are coupled together. However, with the second power source 122 set in an idle state, no drive power is consumed.

Alternatively, the drive power of the first power source 121 can be reinforced by driving the second power source 122 with a matching rpm.

When transmitting a rotation torque to the first input/output shaft 141 by driving the second power source 122, the drive power of the second power source 122 is transmitted in the order of the high-speed side of the second reduction gear 112, the low-speed side of the second reduction gear 112, and the first input/output shaft 141, as illustrated in Fig. 2B.

At this time, the torque is transmitted to the first power source 121, too, because the rotation on the low-speed side of the second reduction gear 112 is transmitted to the high-speed side of the first reduction gear 111 via the first clutch 131. However, with the first power source 121 set in an idle state, no drive power is consumed.

When transmitting a rotation torque of the first input/output shaft 141 to the first power source 121 or the second power source 122, the rotation of the first input/output shaft 141 is transmitted in the order of the low-speed side of the second reduction gear 112, the first clutch 131, the high-speed side of the first reduction gear 111, and the first power source 121, as well as transmitted in the order of the low-speed side of the second reduction gear 112, the high-speed side of the second reduction gear 112, and the second power source 122, as illustrated in Fig. 2C.

At this time, braking can be applied to the rotation of the first input/output shaft 141 by generating power by one or both of the first power source 121 and the second power source 122.

These operations can be performed only by controlling the drive and energy recovery of the first power source 121 and the second power source 122 by the controller 103, and there is no need to operate other systems.

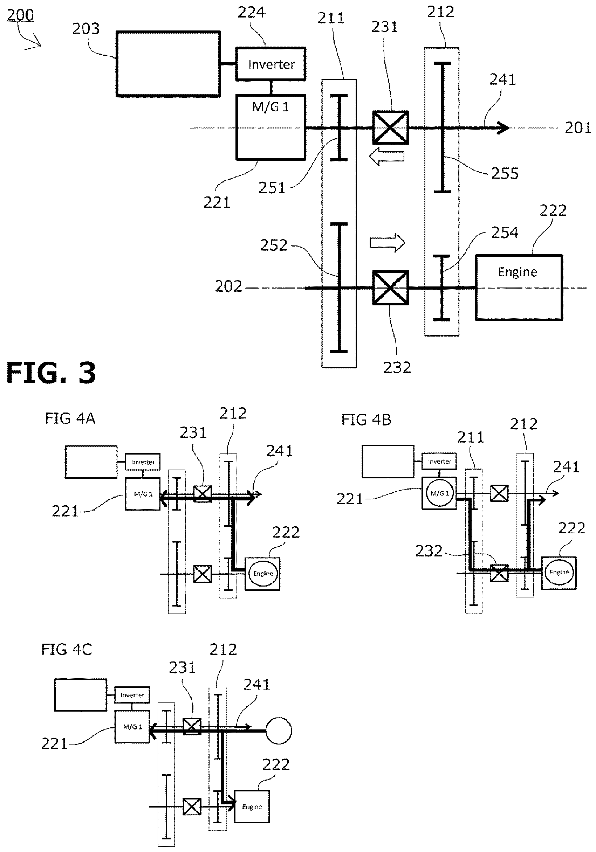

The power transmission system 200 according to a second embodiment of the present invention is suitable for applications where the drive power of an internal combustion engine is assisted by an electric motor for energy recovery during the braking. As illustrated in Fig. 3, this embodiment has the same structure as that of the power transmission system 100 of the first embodiment except that the second power source 222 is configured as an internal combustion engine and does not include an inverter circuit, and therefore the description thereof will be omitted (reference numerals in the 200s are used with the same lower two digits).

The operation of the power transmission system 200 is now explained.

When transmitting a rotation torque to the first input/output shaft 241 by driving only the second power source 222 that is an internal combustion engine, the drive power of the second power source 222 that is an internal combustion engine is transmitted in the order of the high-speed side of the second reduction gear 212, the low-speed side of the second reduction gear 212, and the first input/output shaft 241, as illustrated in Fig. 4A.

At this time, the torque is transmitted to the first power source 221 that is an electric motor, too, because the rotation on the low-speed side of the second reduction gear 212 is transmitted to the high-speed side of the first reduction gear 211 via the first clutch 231.

However, with the first power source 221 that is an electric motor set in an idle state, no drive power is consumed. If there is a surplus in the drive power of the second power source 222 that is an internal combustion engine, this may be used to generate power by the first power source 221 that is an electric motor.

When transmitting a rotation torque to the first input/output shaft 241 by driving the first power source 221 that is an electric motor to assist the drive power of the second power source 222 that is an internal combustion engine, the drive power of the first power source 221 is transmitted in the order of the high-speed side of the first reduction gear 211, the low-speed side of the first reduction gear 211, the second clutch 232, the high-speed side of the second reduction gear 212, the low-speed side of the second reduction gear 212, and the first input/output shaft 241, as illustrated in Fig. 4B.

At this time, the high-speed side of the second reduction gear 212 is coupled to the second power source 222, and therefore, the drive power of the second power source 222 that is an internal combustion engine can be assisted by the drive power of the first power source 221 that is an electric motor, by controlling and driving the first power source 221 such as to match with the rpm of the second power source 222.

When applying braking to the rotation of the first input/output shaft 241, the rotation of the first input/output shaft 241 is transmitted in the order of the low-speed side of the second reduction gear 212, the high-speed side of the second reduction gear 212, and the second power source 222, as illustrated in Fig. 4C, so that engine braking by the second power source 222 that is an internal combustion engine is applied.

Since the rotation is also transmitted in the order of the low-speed side of the second reduction gear 212, the first clutch 231, the high-speed side of the first reduction gear 211, and the first power source 221, the braking can be further assisted by generating power by the first power source 221 that is an electric motor.

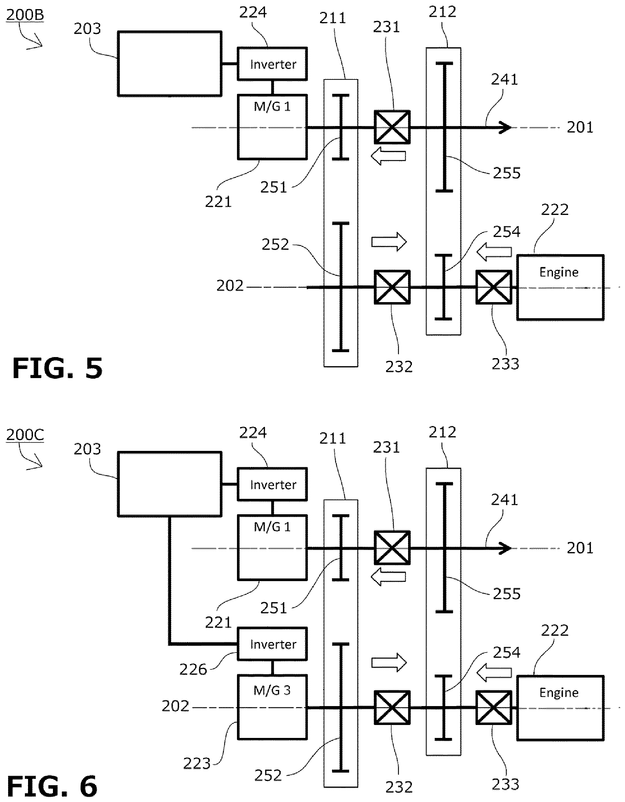

A power transmission system 200B according to a first variation example of the second embodiment of the present invention is configured to include a third clutch 233 between the second power source 222 that is an internal combustion engine and the high-speed side of the second reduction gear 212, to allow rotation transmission only from the second power source 222 that is an internal combustion engine to the high-speed side of the second reduction gear 212, as illustrated in Fig. 5. Other configurations are the same as those of the power transmission system 200 of the second embodiment.

With the power transmission system 200B according to this first variation example, braking on the rotation of the first input/output shaft 241 is applied only by the power generation by the first power source 221 that is an electric motor so that energy loss caused by engine braking can be reduced.

These operations can be performed only by controlling the drive and energy recovery of the first power source 221 by the controller 203, and there is no need to operate other systems.

More detailed control may be performed by configuring the system such that the controller 203 can control the On/Off or slip of the first clutch 231 and the second clutch 232.

A power transmission system 200C according to a second variation example of the second embodiment of the present invention includes, as illustrated in Fig. 6, a third power source 223 that is an electric motor driven by an inverter circuit 226 and coupled to the low-speed side of the first reduction gear 211 on the second rotation center axis 202. Other configurations are the same as those of the power transmission system 200B according to the first variation example of the second embodiment.

In the power transmission system 200B according to this first variation example, the first power source 221 that is an electric motor and the third power source 223 that is an electric motor are directly connected to the high-speed side and the low-speed side of the first reduction gear 211 and rotated always simultaneously at different rpms.

This enables optimal distribution of the drive and energy recovery to the two electric motors by the controller 203, which in turn enables a further improvement in drive efficiency and regeneration efficiency.

While embodiments of the present invention have been described above in detail, the present invention is not limited to the embodiments described above. Various design changes may be made without departing from the scope of the present invention set forth in the claims.

For example, as opposed to the configuration of the embodiments above in which the clutches are one-way clutches and switch among various modes without any control from outside, clutches that allow On/Off control or slip control by the controller 103 may be adopted to enable switching among a wider variety of modes and to enable smoother transition between modes.

While the power sources that are electric motors are driven by inverter circuits in the embodiments above, any types of electric motor may be used.

The reduction gears may be any drive systems that use belts, toothed wheels, hydraulic pressure, etc., or a combination of these, as opposed to the chain drive system in the embodiments above.

### [Reference Signs List]

100, 200 Power transmission system
101, 201 First rotation center axis
102, 202 Second rotation center axis
103, 203 Controller
111, 211 First reduction gear
112, 212 Second reduction gear
121, 221 First power source
122, 222 Second power source
223 Third power source
124, 224 Inverter circuit (of the first power source)
125 Inverter circuit (of the second power source)
226 Inverter circuit (of the second power source)
131, 231 First clutch
132, 232 Second clutch
233 Third clutch
141, 241 First input/output shaft
151, 251 Sprocket (on the high-speed side of the first reduction gear)
152, 252 Sprocket (on the low-speed side of the first reduction gear)
154, 254 Sprocket (on the high-speed side of the second reduction gear)
155, 255 Sprocket (on the low-speed side of the second reduction gear)

## Claims

1. A power transmission system comprising: at least two power sources including a first power source and a second power source; at least one input/output shaft including a first input/output shaft; two reduction gears including a first reduction gear and a second reduction gear; and at least two clutches including a first clutch and a second clutch,
the first reduction gear and the second reduction gear having at least two common rotation center axes including a first rotation center axis and a second rotation center axis,
the first power source being coupled to a high-speed side of the first reduction gear on the first rotation center axis,
the second power source being coupled to a high-speed side of the second reduction gear on the second rotation center axis,
the first input/output shaft being coupled to a low-speed side of the second reduction gear on the first rotation center axis,
the high-speed side of the first reduction gear being coupled to the low-speed side of the second reduction gear on the first rotation center axis via the first clutch, and
a low-speed side of the first reduction gear being coupled to the high-speed side of the second reduction gear on the second rotation center axis via the second clutch.

2. The power transmission system according to claim 1, wherein at least one of the two reduction gears is configured by a sprocket and a chain.

3. The power transmission system according to claim 1 or 2, wherein at least one of the at least two clutches is a one-way clutch.

4. The power transmission system according to any one of claims 1 to 3, wherein the at least two power sources include at least one electric motor.

5. The power transmission system according to claim 4, wherein the at least two power sources include at least one internal combustion engine.

6. The power transmission system according to any one of claims 1 to 5, further comprising a third power source coupled to the low-speed side of the first reduction gear on the second rotation center axis via a third clutch.
